# EUROPÄISCHE PATENTSCHRIFT

(11) **EP 1 360 090 B1**
(45) Veröffentlichungstag und Bekanntmachung des Hinweises auf die Patenterteilung: **12.01.2005**
(21) Anmeldenummer: 01925279.0
(22) Anmeldetag: 16.02.2001
(51) Int. Cl.: B60R 16/02

(54) **KRAFTFAHRZEUG-BORDNETZ**
MOTOR VEHICLE ELECTRIC SYSTEM
RESEAU DE BORD DE VEHICULE AUTOMOBILE

(43) Veröffentlichungstag der Anmeldung: 12.11.2003
(73) Patentinhaber: SIEMENS AKTIENGESELLSCHAFT, 80333 München (DE)
(72) Erfinder: BOLZ, Stephan, 93102 Pfatter (DE); KNORR, Rainer, 93055 Regensburg (DE)
(86) Internationale Anmeldenummer: PCT/DE2001/000601
(87) Internationale Veröffentlichungsnummer: WO 2002/066293

(56) Entgegenhaltungen:
- EP-A- 0 533 037
- EP-A- 1 013 506
- DE-A- 19 903 427
- US-A- 5 552 681
- US-A- 5 998 976
- BONERT R ET AL: "SUPER-CAPACITORS FOR PEAK LOAD SHAVING OF BATTERIES" EPE '97. 7TH. EUROPEAN CONFERENCE ON POWER ELECTRONICS AND APPLICATIONS. TRONDHEIM, SEPT. 8 - 10, 1997, EPE. EUROPEAN CONFERENCE ON POWER ELECTRONICS AND APPLICATIONS, BRUSSELS, EPE ASSOCIATION, B, Bd. 1 CONF. 7, 8. September 1997 (1997-09-08), Seiten 1055-1060, XP000769079 ISBN: 90-75815-02-6

## Beschreibung

Die Erfindung betrifft ein Kraftfahrzeug-Bordnetz gemäß den Merkmalen des Oberbegriffs von Anspruch 1. Ein solches Kraftfahrzung-Bordnetz ist aus der US5 552 681 A bekannt.

Der Betrieb eines Starter-Generators in einem Kraftfahrzeug kann prinzipiell an einer Bordnetzspannung von 14V erfolgen (14V, genauer 14.4V ist die Ladespannung eines 12V-Akkumulators). Die Abgabeleistung, aber auch die Generatorleistung ist dabei technisch sinnvoll auf maximal 3kW begrenzt, da sonst die Bordnetzströme zu hoch würden. Ein Starter-Generator kann zwar bei einer Bordnetzspannung von 14V die Brennkraftmaschine starten und die elektrischen Lasten während der Fahrt versorgen, für weitere Funktionen wie Boost (Beschleunigen) oder Rekuperation (Bremsen) ist jedoch eine Leistung von mehr als 3kW erforderlich. Diese Leistung ist nur mit einer höheren Bordnetzspannung erreichbar. Es werden deshalb 42V-Bordnetze (42V ist die Ladespannung eines 36V-Akkumulators) entwickelt, welche die Umsetzung großer elektrischer Leistungen, beispielsweise 6kW, erlauben.

Ein Integrierter Starter-Generator, abgekürzt ISG, ist beispielsweise eine Drehstrom-Asynchronmaschine mit elektronischem Wechselrichter, die an Stelle der Schwungscheibe direkt an die Kurbelwelle der Brennkraftmaschine angebaut ist. Sie erlaubt im generatorischen Betrieb die Erzeugung elektrischer Leistung und im motorischen Betrieb die Erzeugung mechanischer Antriebsleistung; sie ersetzt also sowohl den bekannten Generator (Lichtmaschine), als auch den bekannten Starter (Anlasser). Da die verfügbaren Leistungen erheblich steigen (6kW gegenüber 2kW bei bekannten Lichtmaschinen), erlaubt der ISG neben Motorstart und Bordnetzversorgung weitere Funktionen:
Boost (Beschleunigen): Drehmomentunterstützung der Brennkraftmaschine während der Beschleunigungsphase des Fahrzeuges. Der ISG verfügt über ein maximales Drehmoment von ca. 200Nm, dies entspricht etwa dem Drehmoment einer 2Liter-Brennkraftmaschine. Während des Boostvorganges werden für ca. 15 Sekunden Ströme bis 270A benötigt;
Rekuperation (regeneratives Bremsen): Der ISG schöpft beim Bremsen des Fahrzeuges Bewegungsenergie durch Stromerzeugung ab. Dabei werden für bis zu 30 Sekunden Ströme bis 270A erzeugt.

Modellrechnungen weisen eine Kraftstoffersparnis von bis zu 20% bei Nutzung dieser neuen Funktionen aus.

Ein großes Problem ist die kostengünstige Implementierung eines Energiespeichers, der dauerhaft die hohen Lade- und Entladeströme beherrschen kann. Denn es sind für die Lebensdauer eines Kraftfahrzeugs (ca. 150.000km) etwa 300.000 bis 500.000 Lade- und Entladezyklen zu veranschlagen.

Bekannte 12V-Kraftfahrzeug-(Kfz)-Bordnetze sind mit Blei-Säure-Akkumulatoren ausgerüstet. Dieser Akkumulatortyp weist eine sehr beschränkte Zyklenfestigkeit auf, da hier der Energietransport mit einem verlustbehafteten Materialtransport (Ionen) verbunden ist; d.h. die Elektroden unterliegen einer Umstrukturierung mit stetiger Abnahme der aktiven Oberfläche (Kapazitätsverlust) sowie einem Materialverlust, der zur Ablagerung von Bleischlamm führt.

Gegenwärtig werden die Akkumulatoren im 14V-Bordnetz bei annähernd konstantem Ladezustand betrieben. Die kurzzeitigen Stromentnahmen beim Anlassen und im Leerlauf fallen dabei kaum ins Gewicht. Die Hauptfunktion des Akkumulators ist eher die eines großen Pufferkondensators, der mit seiner großen Kapazität das Bordnetz stabilisiert. Der Kapazitätsverlust schreitet nur langsam voran und die Lebensdauer beträgt entsprechend mehrere Jahre.

Anders ist die Situation beim 42V-Kfz-Bordnetz im hochdynamischen Betrieb am ISG. Modellrechnungen lassen eine Lebensdauer eines typischen Blei-Säure-Akkumulators von 5.000 bis 10.000km erwarten. Im praktischen Versuch ergab sich eine Fahrstrecke von 6.000km bis zum Ausfall. Auch ist es technisch schwierig, stets eine Ladefähigkeit für Ströme bis zu 270A sicherzustellen. Ergebnis: bei Verwendung von Blei-Säure-Akkumulatoren für Boost und Rekuperation ist ein Austausch des Akkumulators bei jedem Kraftfahrzeug-Serviceintervall oder noch öfter notwendig. Dies ist in keinem Falle akzeptabel.

Ein System mit einem 36V-Blei-Säure-Akkumulator hat zwar bei weitem die niedrigsten Anschaffungskosten, über die Lebensdauer des Kraftfahrzeugs hinweg ergeben sich jedoch sehr hohe Folgekosten.

NiMH-(Nickel Metall-Hydrid)-Akkumulatoren eignen sich prinzipiell auch für Boost und Rekuperation. Allerdings muss der Akkumulator zum Erreichen der notwendigen Zyklenfestigkeit erheblich überdimensioniert werden. Ist rechnerisch zur Energie- bzw. Leistungsbereitstellung Akkumulator mit 6kW und 11Ah nötig, so sind zum Erreichen der Zyklenfestigkeit wenigstens 14Ah erforderlich. Ein ungelöstes Problem ist die Ableitung der entstehenden Wärme, die bei großem Ladungsaustausch entsteht. Auch die Anschaffungskosten werden sich auf Grund der verwendeten Materialien kaum wesentlich senken lassen.

Li-Ion-(Lithium-Ionen)-Akkumulatoren sind aus technischer Sicht vielversprechend (Energiedichte, Gewicht, Wirkungsgrad. etc.). Die Entwicklung ist bereits angelaufen; automobiltaugliche Produkte werden allerdings erst in einigen Jahren verfügbar sein. Die heute erkennbaren Kosten dürften noch höher als bei NiMH-Akkumulatoren sein.

Nur wenige Energiespeicher sind in der Lage, die geforderten, hohen Zyklenzahlen bzw. den hohen Energiedurchsatz (bei 200.000 Boostvorgängen werden insgesamt ca. 12.6 MWh an Energie bzw. ca. 180.000 Ah benötigt) bereitzustellen. Geeignete Energiespeicher sind Doppelschichtkondensatoren (Double Layer Capacitor: DLC). Diese sind bereits verfügbar und in der Lage, die beim Boosten und Rekuperieren umgesetzten Energien speichern und abgeben zu können. Auch sind die dabei auftretenden Ströme unproblematisch. Wegen des guten Wirkungsgrades ist auch die Eigenerwärmung gering.

Die begrenzte Energiespeicherfähigkeit des Doppelschichtkondensators macht allerdings einen zusätzlichen Akkumulator, beispielsweise einen preiswerten Blei-Säure-Akkumulator, erforderlich. Da dieser Akkumulator nun nicht mehr zyklisch belastet wird, ist eine Lebensdauer gemäß heutigem Standard zu erwarten.

Die aus dem Energiespeicher entnommene Energie beträgt bei einem Startvorgang von 1 Sekunde ca. 2 Wh. Pro gefahrenem Kilometer wird statistisch mit 2 Startvorgängen gerechnet. Auch beim Beschleunigen werden zwei Boostvorgänge pro gefahrenen Kilometer erwartet. Dabei können bei einem 6kW-Starter-Generator pro Boostvorgang bis zu 63 Wh benötigt werden. Beim Startvorgang kann der maximale Strom über 500 A, beim Boostvorgang mehr als 250 A betragen.

Nachteilig ist jedoch, dass ein Energieaustausch am Kondensator prinzipiell nur über Spannungsvariation möglich ist. Um 75% der Ladung zu bewegen, muss die Kondensatorspannung um 50% variiert werden (E = 1/2*C*(U₂²-U₁²)). Für das 42V-Bordnetz würde dies eine nicht akzeptable Variation von 42V (im voll geladenen Zustand) bis 21V bedeuten. Folglich wird in bekannten Konstruktionen zwischen Bordnetz und Doppelschichtkondensator DLC ein bidirektionaler Gleichspannungswandler eingesetzt, der diesen Mangel wieder ausgleicht. So kann bei schwankender Spannung am Doppelschichtkondensator das 42V-Bordnetz stabil gehalten werden.

Technisch gesehen ist die Kombination von Doppelschichtkondensator und Blei-Säure- Akkumulator heute am vielversprechendsten. Zum hohen Preis von Doppelschichtkondensator und Akkumulator kommen allerdings noch die hohen Kosten für einen bidirektionalen Gleichspannungswandler hinzu, so dass erhebliche Gesamtkosten zu erwarten sind. Nicht zuletzt diese Kosten verzögern eine rasche Einführung dieses Systems in Serienfahrzeuge.

Es ist Aufgabe der Erfindung, ein Kraftfahrzeug-Bordnetz mit einer Kombination von Doppelschichtkondensator und preiswertem Akkumulator zu schaffen, welches ohne kostenintensiven bidirektionalen Gleichspannungswandler auskommt und damit die Systemkosten erheblich senkt.

Diese Aufgabe wird erfindungsgemäß durch die in Anspruch 1 genannten Merkmale gelöst.

Der besondere Vorteil der Erfindung besteht darin, dass der kostenintensive, bidirektionale Gleichspannungswandler durch vier (beim 42V/14V-"Zweispannungs"-Bordnetz) bzw. zwei (beim 42V-"Einspannungs"-Bordnetz) gesteuerte Schalter ersetzt wird. Da die am ISG-Ausgang (die an einem Zwischenkreiskondensator C) anliegende Spannung bzw. der zum oder vom ISG fließende Strom steuerbar ist, kann das Umschalten nahezu leistungslos erfolgen, was die Anforderungen an die Schalter ganz wesentlich reduziert.
Beim Boosten und Rekuperieren wird der integrierte Starter-Generator ISG vom Akkumulator getrennt und stattdessen mit dem Doppelschichtkondensator DLC verbunden. Die Lasten werden in diesem Betriebszustand vom Akkumulator versorgt.

Durch die Möglichkeit eines wechselseitigen Ladungstransfers zwischen 36V-Akkumulator, Doppelschichtkondensator und 12V-Akkumulator wird für den Notfall eine doppelte Redundanz für die Energiebereitstellung in allen Bordnetzbereichen geschaffen.

Durch Überhöhung der Spannung am Doppelschichtkondensator auf die maximal zulässige Spannung, bei der kein zusätzlicher Berührungsschutz erforderlich ist (60V), ergibt sich der Vorteil, dass der Starter-Generator ein höheres Drehmoment bereitstellen kann und die Energiespeicherfähigkeit des Doppelschichtkondensators ansteigt. Dadurch kommt es zu einer Leistungssteigerung des gesamten ISG-Bordnetzes.

Ausführungsbeispiele nach der Erfindung werden nachstehend anhand einer schematischen Zeichnung näher erläutert. Es zeigen:
- Figur 1: den Entladespannungsverlauf von Doppelschichtkondensator und Blei-Säure-Akkumulator,
- Figur 2: den Schaltplan eines bekannten 42V/14V-Kraftfahrzeug-Bordnetzes,
- Figur 3: den Schaltplan eines weiteren 42V/14V-Kraftfahrzeug-Bordnetzes,
- Figur 4: den Schaltplan eines erfindungsgemäßen 42V/14V-Kraftfahrzeug-Bordnetzes, und
- Figur 5: einen Schaltplan eines erfindungsgemäßen 42V-Kraftfahrzeug-Bordnetzes.

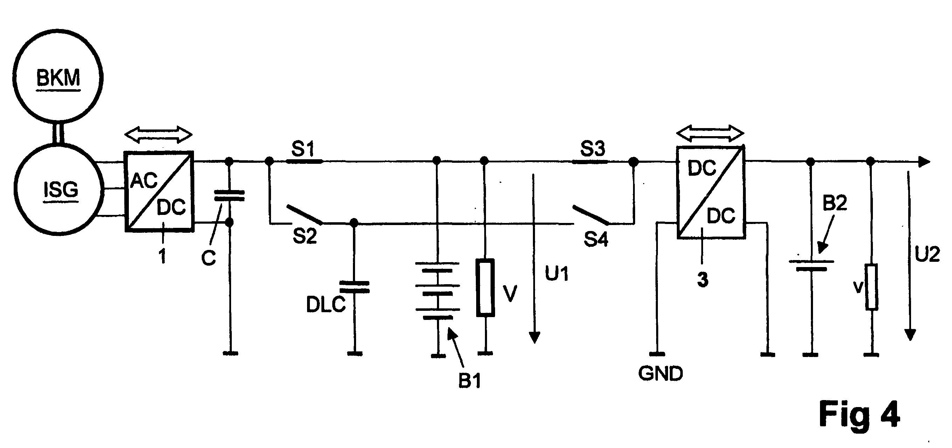

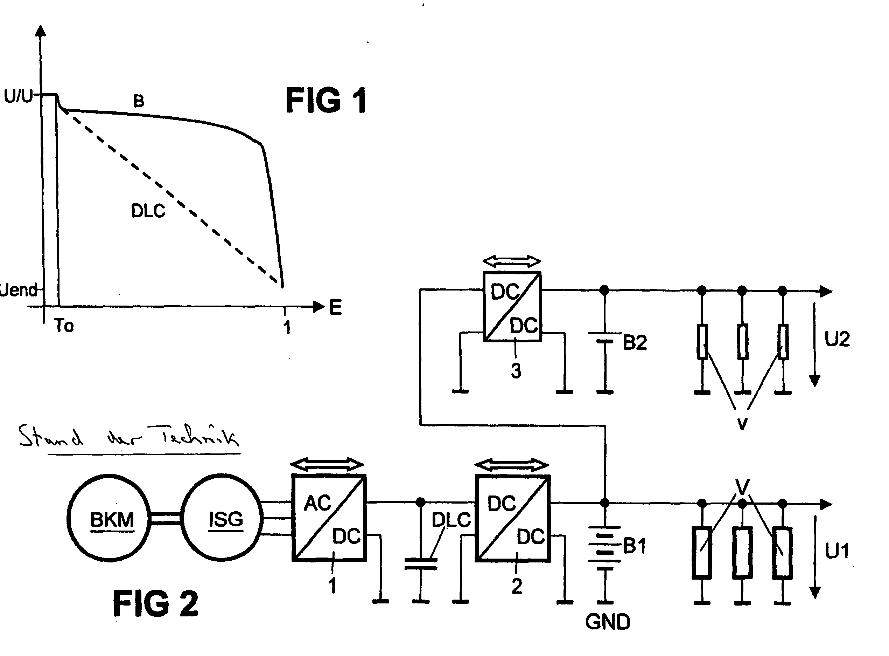

Figur 1 zeigt den Spannungsverlauf beim Entladen eines Doppelschichtkondensators DLC (strichliert dargestellt) und eines Blei-Säure-Akkumulators B (ausgezogene Linie). Durch die ab dem Zeitpunkt To unterschiedliche Spannungscharakteristik von Kondensator und Akkumulator ist eine direkte Kopplung beider Speichersysteme in einem Bordnetz nicht möglich. Dazu ist ein weiteres Stellglied erforderlich.

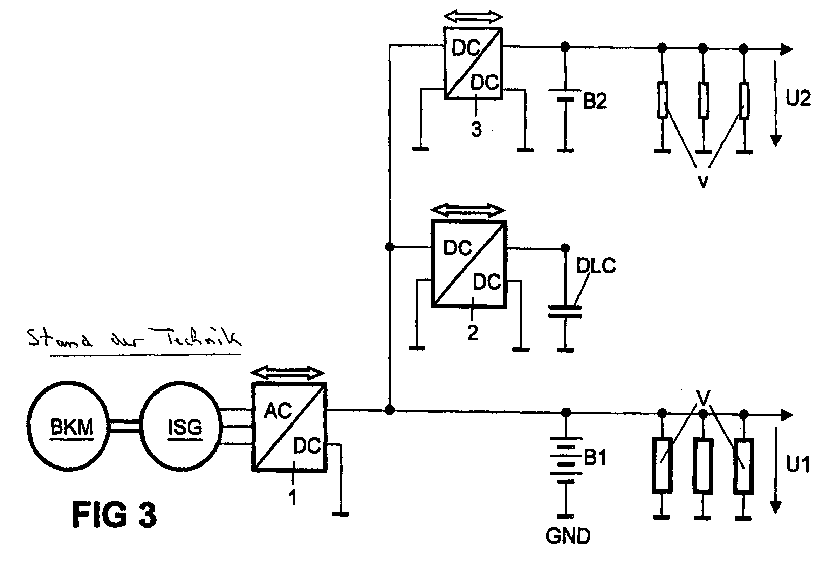

Figur 2 zeigt einen Schaltplan eines bekannten 42V/14V-Kfz-Bordnetzes mit einem integrierten Starter-Generator ISG, bei dem ein Doppelschichtkondensator DLC verwendet wird, und zwischen diesem und einem 36V-Akkumulator B1 als weiteres Stellglied ein bidirektionaler DC/DC-Wandler 2 eingesetzt ist.

Die mittels dieser Schaltung durchgeführten Betriebsabläufe werden von einer nicht dargestellten Steuer-/Regel-Schaltung gesteuert/geregelt.

Der integrierte Starter-Generator ISG ist eine mit einer Brennkraftmaschine BKM mechanisch gekoppelte Asynchronmaschine, die über einen bidirektionalen AC/DC-Wandler 1 (Wechselrichter) mit dem Doppelschichtkondensator DLC verbunden ist. Der Doppelschichtkondensator DLC ist über den bereits erwähnten bidirektionalen DC/DC-Wandler 2 mit dem 36V-Akkumulator B1 verbunden, an dem eine Spannung U1 von 36/42V liegt (Nennspannung 36V, im vollgeladenen Zustand 42V). Aus diesem 36V-Akkumulator werden Verbraucher V direkt gespeist, die eine größere Last darstellen, beispielsweise elektrischer Ventiltrieb, Frontscheibenheizung, Sitzheizung, Klimaanlage oder bei entladenem DLC der ISG als Anlasser u.s.w., aber auch ein 12V-Akkumulator B2 und die von ihm gespeisten kleineren Lasten v.

Der 36V-Akkumulator B1 ist über einen weiteren bidirektionalen DC/DC-Wandler 3 kleinerer Leistung mit diesem 12V-Akkumulator B2 verbunden, an dem eine Spannung U2 von 12/14V liegt (Nennspannung 12V, im vollgeladenen Zustand 14.4V), welche die kleineren Lasten v, wie Fahrzeug- und Armaturenbeleuchtung etc. speist.

Beim Start der Brennkraftmaschine BKM und im Boostbetrieb (beim Beschleunigen) arbeitet der ISG im Motorbetrieb - er treibt die Brennkraftmaschine BKM an - und bezieht die benötigte Energie aus dem Doppelschichtkondensator DLC (über den AC/DC-Wandler 1) oder, wenn dieser nicht geladen ist, aus dem 36V-Akkumulator B1 (über den DC/DC-Wandler 2 und den AC/DC-Wandler 1).

Im normalen Fahrbetrieb wird der ISG von der Brennkraftmaschine BKM angetrieben und arbeitet somit im Generatorbetrieb. Dabei lädt er die Energiespeicher DLC, B1 und B2 auf.

Dies kann im normalen Fahrbetrieb mit geringer Leistung erfolgen.

Im Rekuperationsbetrieb (beim Bremsen) erfolgt diese Aufladung mit erhöhter Leistung, die der maximalen Leistungsabgabe des ISG entsprechen kann. Für einen 6 kW-Starter-Generator bedeutet dies einen maximalen Ladestrom von über 250 A. Pro gefahrenem Kilometer muss statistisch mit zwei nennenswerten Bremsvorgängen gerechnet werden.

Im normalen Betrieb werden die beiden DC/DC-Wandler 2 und 3 nur zum Laden der Akkumulatoren B1, B2 und zur Versorgung der Verbraucher V, v - also in einer Richtung - benutzt. Ausgelegt werden beide DC/DC-Wandler 2 und 3 jedoch bidirektional, also redundant, um im Notfall auch den 36V-Akkumulator B1 aus dem 12V-Akkumulator und den DLC aus dem 36V-Akkumulator B1 oder dem 12V-Akkumulator B2 laden zu können.

Der DC/DC-Wandler 2 bedeutet zusätzliches Gewicht, seine Kosten sind sehr hoch, und die gesamte Energieversorgung der Fahrzeuglasten muss über ihn erfolgen (hohe Wirkungsgradanforderung), wodurch seine Leistung den Fahrzeuglasten entsprechen muss. Bei z.B. 4kW installierter Verbraucherleistung muss der DC/DC-Konverter für Ströme bis ca. 100A ausgelegt werden. Soll zudem der DLC zur Energiespeicherung und - speisung bei Boost und Rekuperation verwendet werden, wird seine Spannung stark schwanken. Der DC/DC-Wandler 2 muss dann für diese Spannungsdynamik ausgelegt sein, was zu einer wesentlich komplexeren Struktur und gesteigerten Kosten führt (bidirektionaler Aufwärts-/Abwärtsregler).

Figur 3 zeigt eine weitere, mögliche Variante eines 42V/14V-Kfz-Bordnetzes. Im Gegensatz zu Figur 2 ist nun jedoch der Doppelschichtkondensator DLC nicht mit dem AC/DC-Wandler 1 direkt verbunden, sondern über den DC/DC-Wandler 2 entkoppelt. Das 42V-Bordnetz mit dem Akkumulator B1 und den Verbrauchen V, sowie der DC/DC-Wandler 3 sind direkt mit dem Ausgang des AC/DC-Wandlers 1 verbunden. Ein gravierender Nachteil dieser Schaltungsvariante ist, dass der DC/DC-Wandler nun für den wesentlich höheren Strom (>250A) bei Boost und Rekuperation ausgelegt werden muss und - wie im Beispiel nach Figur 2 - ein bidirektionaler Aufwärts/Abwärtswandler sein muss. Dies führt zu einer weiteren Kostensteigerung.

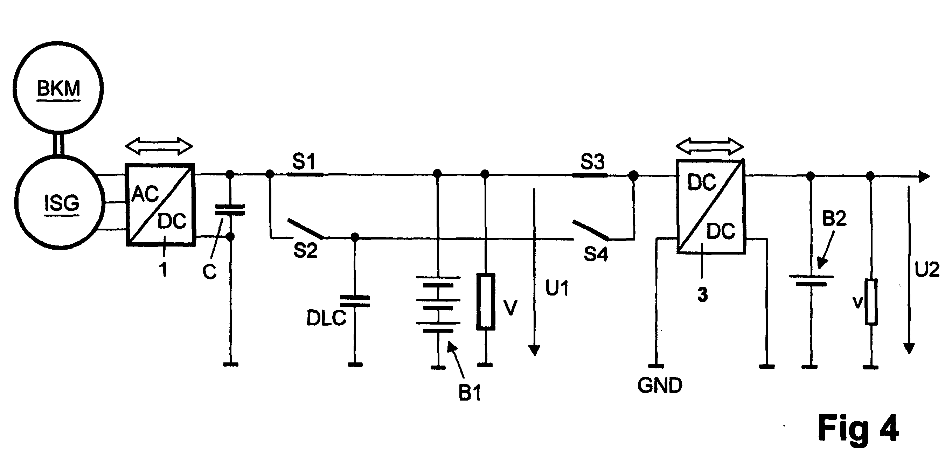

Figur 4 zeigt den Schaltplan eines erfindungsgemäßen 42V/14V-Kfz-Bordnetzes (eines "Zweispannungs"-Bordnetzes) mit einem mit der Brennkraftmaschine BKM mechanisch gekoppelten Integrierten Starter-Generator ISG, dem ein bidirektionaler AC/DC-Wandler 1 folgt, zwischen dessen beiden Ausgängen ein Zwischenkreiskondensator C liegt. Der negative Anschluss des Zwischenkreiskondensators C und der mit ihm verbundene, negative Gleichspannungsanschluss des AC/DC-Wandlers 1 sind mit dem Bezugspotential GND der Schaltung verbunden.

Der positive Anschluss des Zwischenkreiskondensators C und der mit ihm verbundene, positive Gleichspannungsanschluss des AC/DC-Wandlers 1 führt zu zwei parallelen Schaltern S1 und S2.

Der erste Schalter S1 verbindet den positiven Anschluss des AC/DC-Wandlers 1 mit dem positiven Pol eines 36V-Akkumulators B1, mit den parallel zu ihm liegenden großen Lasten V (deren andere Anschlüsse mit dem Bezugspotential GND verbunden sind), und mit einem dritten Schalter S3.

Der zweite Schalter S2 verbindet den positiven Anschluss des AC/DC-Wandlers 1 mit dem positiven Anschluss eines Doppelschichtkondensators DLC, dessen negativer Anschluss mit dem Bezugspotential GND verbunden ist, und mit einem vierten Schalter S4.

Die beiden anderen Anschlüsse des dritten und vierten Schalters S3, S4 sind miteinander und mit einem positiven Anschluss des zweiten DC/DC-Wandlers 3 verbunden. Die restliche Schaltung entspricht der Schaltung nach Figur 2.

Auch die mittels dieser Schaltung durchgeführten Betriebsabläufe, insbesondere die Bestimmung der Arbeitsrichtung der Wandler (Aufwärts- oder Abwärtswandlung), die Aufladung des Zwischenkreiskondensators C auf einen bestimmten Spannungswert und die Schaltstellungen der vier Schalter S1 bis S4 werden von einer nicht dargestellten Steuer-/Regel-Schaltung gesteuert/geregelt.

Die Schalter S1 und S2 stellen die Verbindung des integrierten Starter-Generators ISG mit dem Doppelschichtkondensator DLC bzw. dem 36V-Akkumulator B1 her. Schalter S3 stellt eine Verbindung zwischen dem 36V-Akkumulator B1 und dem 12V-Akkumulator B2 her, während Schalter S4 eine zusätzliche Kopplung des Doppelschichtkondensators DLC und des 12V-Akkumulators B2 ermöglicht.

Folgende Schaltzustände der Schalter S1 und S2 sind möglich:

### Schalter S1 und Schalter S2 nichtleitend:

Über die Ansteuerung der Brücken des AC/DC-Wandlers 1 lässt sich die Spannung des Zwischenkreiskondensators C beeinflussen und auf diese Weise an die Spannung des Doppelschichtkondensators DLC und/oder des 36V-Akkumulators B1 anpassen. Da die Spannung am ISG-Ausgang (die am Zwischenkreiskondensator C anliegende Spannung) steuerbar ist, kann das Umschalten nahezu leistungslos erfolgen. (Schließen im spannungslosen Zustand)

Ebenso lässt sich über die Ansteuerung der Brücken des AC/DC-Wandlers 1 vor dem Öffnen der Schalter S1 oder S2 der Stromfluss durch den AC/DC-Wandler 1 annähernd auf Null reduzieren, so dass ein Öffnen der Schalter im stromlosen Zustand erfolgt. Dies reduziert die Anforderungen an die Schalter ganz wesentlich.

### Schalter S1 leitend und Schalter S2 nichtleitend:

Dies ist der normale Fahr-Betriebszustand, wie in Figur 4 dargestellt. Normaler Generatorbetrieb ohne Rekuperation ermöglicht in dieser Schalterstellung eine Aufladung des 36V-Akkumulators B1, sowie die Versorgung des 14/42V-Kfz-Bordnetzes aus dem ISG.

Entladen oder Laden des 36V-Akkumulators B1 über den AC/DC-Wandler 1 beim Boosten und Rekuperieren ist zwar theoretisch möglich, dieser Betriebszustand sollte aber wegen der begrenzten Zyklenfestigkeit des 36V-Akkumulators B1 vermieden werden.

### Schalter S1 nichtleitend und Schalter S2 leitend:

Entladen oder Laden des Doppelschichtkondensators DLC über den AC/DC-Wandler 1 beim Boosten (Beschleunigen) oder Rekuperieren (Bremsen). In diesem Schalterzustand ist keine Energieentnahme aus dem 36V-Akkumulator B1 für einen Boostvorgang möglich. Beim Rekuperieren kann der 36V-Akkumulator B1 keine Energie aufnehmen. Die elektrische Versorgung der Bordnetzlasten V (und des 12V-Akkumulators B2 und der an ihn angeschlossenen Lasten v) erfolgen über den 36V-Akkumulator B1.

### Schalter S1 und Schalter S2 leitend:

Dies ist eine unzulässige Schalterstellung! Sie würde ein identisches Spannungsniveau zwischen Doppelschichtkondensator DLC und 36V-Akkumulator B1 voraussetzen. Bei unterschiedlichen Spannungen wäre ein Auftreten von hohen Ausgleichströmen zwischen Doppelschichtkondensator DLC und 36V-Akkumulator B1 nicht zu vermeiden. Schalter S1 und S2 sollten deshalb so gegeneinander verriegelt sein, dass dieser Schaltzustand verhindert wird.

### Schalter S3 und Schalter S4 nichtleitend:

In dieser Stellung ist das 14V-Bordnetz vom 42V-Bordnetz getrennt. S3 uns S4 können so auch die Funktion eines Verpolschutzes übernehmen.

### Schalter S3 leitend und Schalter S4 nichtleitend:

Dies ist der normale Fahr-Betriebszustand. Durch diese Schalterstellung wird eine Ladung des 12V-Akkumulators B2 aus dem 36V-Akkumulator B1 ermöglicht. Der bidirektionale DC/DC-Wandler 3, der die Verbindung des 36V-Akkumulators B1 mit dem 12V-Akkumulator B2 herstellt, arbeitet im Abwärtsbetrieb.

Schaltet man den DC/DC-Konverter in Aufwärtsbetrieb, so kann ein entladener 36V-Akkumulator vom 12V-Akkumulator aus nachgeladen werden.

### Schalter S3 nichtleitend und Schalter S4 leitend:

Ist der Doppelschichtkondensator DLC entladen, z.B. bei einer längeren Standzeit des Fahrzeuges, kann in dieser Schalterstellung der Doppelschichtkondensator DLC über den DC/DC-Wandler 3 aus dem 12V-Akkumulator B2 nachgeladen werden. Der DC/DC-Wandler 3 arbeitet dann im Aufwärtsbetrieb. Dies ermöglicht - im Rahmen der Ladung des 12V-Akkumulators - eine Ladungserhaltung am DLC.

### Schalter S3 und Schalter S4 leitend:

Dies ist eine unzulässige Schalterstellung. Beide Schalter dürfen nicht gleichzeitig die Stellung "leitend" aufweisen, da es in diesem Fall zu einem Potentialausgleich zwischen 36V-Akkumulator B1 und Doppelschichtkondensator DLC kommen würde. Die Ausgleichströme wären sehr hoch! Schalter S3 und S4 sollten deshalb gegeneinander so verriegelt sein, dass dieser Schaltzustand verhindert wird.

In der einfachen, mit wenigen zusätzlichen elektrischen Bauteilen zu realisierenden Einbindung des Doppelschichtkondensators DLC - mit hoher Leistungsfähigkeit und hoher Zyklenfestigkeit - in ein Bordnetz mit einem Starter-Generator ISG liegt ein besonderer Vorteil der Erfindung.

Der besonders aufwendige DC/DC-Wandler 2 wird durch wenige Schalter ersetzt, die im einfachsten Falle durch preiswerte Relais oder durch gesteuerte Schalttransistoren realisiert werden können.

Durch diese Schaltung wird die Zyklenhäufigkeit des 36V-Akkumulators B1 deutlich reduziert und auf den Doppelschichtkondensator DLC übertragen, der dafür eine ausreichende Zyklenfestigkeit aufweist. Dadurch wird das 42V-Bordnetz deutlich entlastet. Starke Spannungsschwankungen durch den Start-Stop-Betrieb, Boost- und Rekuperationsbetrieb treten nur lokal am Starter-Generator ISG und am Doppelschichtkondensator DLC auf.

Die obere und untere Spannungsgrenze nach Sican/VDA-Empfehlung von 48V bzw. 30V bezieht sich nicht auf den ISG, sondern nur auf die Spannung des 42V-Bordnetzes, welche durch diese Anordnung unberührt bleibt. Um die Leistungsfähigkeit des Starter-Generators ISG und des Doppelschichtkondensators DLC zu erhöhen, kann aber die Spannung dieser beiden Komponenten temporär höher sein. Die maximale Spannung sollte unter 60V (der maximal zulässigen Spannung, die keinen zusätzlichen Berührungsschutz erfordert) liegen. Dann ergibt sich der Vorteil, dass der Starter-Generator ISG ein höheres Drehmoment bereitstellen kann und die im Doppelschichtkondensator DLC speicherbare Energie, die sich quadratisch zur Spannung verhält, ansteigt. Dadurch kommt es zu einer Leistungssteigerung des gesamten ISG-Bordnetzes.

In zukünftigen Bordnetzen wird es kein duales 42/14V-Bordnetz mehr geben, sondern nur noch ein 42V-Bordnetz.

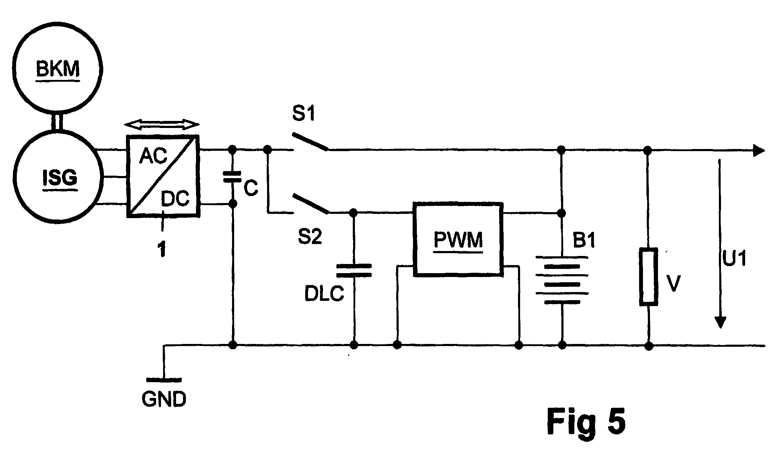

Figur 5 zeigt ein Ausführungsbeispiel nach der Erfindung für ein reines 42V-Bordnetz. Die Schalter S3 und S4, der 12V-Akkumulator B2 und der bidirektionale DC/DC-Wandler 3 entfallen. Es wird nur noch Lasten V geben, die alle an einer Spannung von 36/42V betrieben werden.

Die dafür vorgesehene Schaltung entspricht im wesentlichen dem in Figur 3 dargestellten Schaltungsteil, der sich links von dem Spannungspfeil U1 befindet. Die Nachladung des Doppelschichtkondensators DLC aus dem 36V-Akkumulator B1 erfolgt über einen DC/DC-Wandler, der im einfachsten Falle ein kleiner pulsweiten-modulierter Regler PWM sein kann. Er wird zwischen den positiven Anschlüssen von Akkumulator B1 und Doppelschichtkondensator DLC eingefügt und ist - bei entladenem DLC - nur solange in Betrieb, bis die Spannung am DLC annähernd der Akkumulatorspannung U1 (oder einer maximalen Spannung von <60V) entspricht. Dies ist insbesondere nach längeren Standzeiten (Selbstentladung des Doppelschichtkondensators) notwendig, um einen Startvorgang sicher gewährleisten zu können. Die Funktionen der Schalter S1 und S2 bleiben, wie beim dualen 42V/14V-Bordnetz nach Figur 3 beschrieben, erhalten.

## Patentansprüche

1. Kraftfahrzeug-Bordnetz mit einer Brennkraftmaschine (BKM) und einem mechanisch mit ihr verbundenen, integrierten Starter-Generator (ISG), der über einen bidirektionalen AC/DC-Wandler (1) im generatorischen Betrieb einen Doppelschichtkondensator (DLC) und einen Akkumulator (B1) auf eine erste Spannung (U1) auflädt und im motorischen Betrieb mit der im Doppelschichtkondensator (DLC) oder im Akkumulator (B1) gespeicherten Energie angetrieben wird, wobei
zwischen dem positiven und dem negativen Gleichspannungsanschluss des bidirektionalen AC/DC-Wandlers (1) ein Zwischenkreiskondensator (C) angeordnet ist,
**dadurch gekennzeichnet,**
**dass** ein erster Schalter (S1) vorgesehen ist, über welchen der positive Gleichspannungsanschluss des bidirektionalen AC/DC-Wandlers (1) mit dem Pluspol des Akkumulators (B1), dessen Minuspol auf Bezugspotential (GND) liegt, verbindbar ist, und
**dass** ein zweiter Schalter (S2) vorgesehen ist, über welchen der positive Gleichspannungsanschluss des bidirektionalen AC/DC-Wandlers (1) mit dem positiven Anschluss des Doppelschichtkondensators (DLC), dessen negativer Anschluss auf Bezugspotential (GND) liegt, verbindbar ist.

2. Kraftfahrzeug-Bordnetz nach Anspruch 1, **dadurch gekennzeichnet, dass** der erste und der zweite Schalter (S1, S2) gegeneinander so verriegelt sind, dass beide nicht gleichzeitig leitend sein können.

3. Kraftfahrzeug-Bordnetz nach Anspruch 1, **dadurch gekennzeichnet, dass** der Zwischenkreiskondensator (C) vor dem Leitendschalten des ersten oder zweiten Schalters (S1, S2) vom AC/DC-Wandler (1) auf einen der am Doppelschichtkondensator (DLC) oder am Akkumulator (B1) liegenden Spannung entsprechenden Spannungswert aufladbar ist.

4. Kraftfahrzeug-Bordnetz nach Anspruch 1, **dadurch gekennzeichnet, dass** der Stromfluss in den AC/DC-Wandler (1) oder aus dem AC/DC-Wandler (1) heraus vor dem Nichtleitendschalten des ersten oder zweiten Schalters (S1, S2) auf einen Minimalwert reduzierbar ist.

5. Kraftfahrzeug-Bordnetz nach Anspruch 1, **dadurch gekennzeichnet, dass** eine Regelschaltung (PWM) vorgesehen ist, mittels welcher der Doppelschichtkondensator (DLC) aus dem Akkumulator (B1) nachladbar ist.

6. Kraftfahrzeug-Bordnetz nach Anspruch 1, **dadurch gekennzeichnet, dass** der Doppelschichtkondensator (DLC) auf eine erhöhte, oberhalb der Spannung (U1) des Akkumulators (B1) liegende, Spannung aufgeladen wird.

7. Kraftfahrzeug-Bordnetz nach Anspruch 1, mit einem weiteren Akkumulator (B2) zur Versorgung von weiteren Lasten (v) mit einer zweiten Spannung (U2), welcher über einen bidirektionalen DC/DC-Wandler (3) vom Akkumulator (B1) aufgeladen wird,
**dadurch gekennzeichnet,**
**dass** ein dritter Schalter (S3) vorgesehen ist, über welchen der Pluspol des ersten Akkumulators (B1) mit einem positiven Anschluss des bidirektionalen DC/DC-Wandlers (3) verbindbar ist, und
**dass** ein vierter Schalter (S4) vorgesehen ist, über welchen der positive Anschluss des Doppelschichtkondensators (DLC) mit demselben positiven Anschluss des bidirektionalen DC/DC-Wandlers (3) verbindbar ist.

8. Kraftfahrzeug-Bordnetz nach Anspruch 7, **dadurch gekennzeichnet, dass** der dritte und der vierte Schalter (S3, S4) gegeneinander so verriegelt sind, dass beide nicht gleichzeitig leitend sein können.

9. Kraftfahrzeug-Bordnetz nach einem der vorhergehenden Ansprüche, **dadurch gekennzeichnet, dass** Betriebsabläufe wie
- Aufladung des Zwischenkreiskondensators (C) auf einen der am Doppelschichtkondensator (DLC) oder am 36V-Akkumulator (B1) liegenden Spannung entsprechenden Spannungswert über den AC/DC-Wandler (1),
- Bestimmung der Arbeitsrichtung der Wandler (Aufwärtsoder Abwärtswandlung),
- Steuerung der Schaltstellungen der Schalter S1 bis S4,
von einer Steuer-/Regel-Schaltung gesteuert/geregelt werden.

10. Kraftfahrzeug-Bordnetz nach einem der Ansprüche 1 bis 6 und 9, **dadurch gekennzeichnet, dass**
- bei motorischem Betrieb des integrierten Starter-Generators (ISG):
- bei nichtleitenden Schaltern (S1 und S2) der Zwischenkreiskondensator (C) auf eine vorgebbare Spannung geladen wird,
- bei leitendem ersten Schalter (S1) der Akkumulator (B1) geladen wird,
- bei leitendem zweiten Schalter (S2) der Doppelschichtkondensator (DLC) geladen wird,
bei generatorischem Betrieb des integrierten Starter-Generators (ISG):
- bei leitendem ersten Schalter (S1) der Starter-Generator (ISG) mit Energie aus dem Akkumulator (B1) angetrieben wird, und
- bei leitendem zweiten Schalter (S2) der Starter-Generator (ISG) mit Energie aus dem Doppelschichtkondensator (DLC) angetrieben wird.

11. Kraftfahrzeug-Bordnetz nach Anspruch 7 oder 8, **dadurch gekennzeichnet, dass**
- bei leitendem dritten Schalter (S3) der Akkumulator (B1) den weiteren Akkumulator (B2) lädt oder von ihm geladen wird, und
- bei leitendem vierten Schalter (S4) der Doppelschichtkondensator (DLC) den weiteren Akkumulator (B2) lädt oder von ihm geladen wird.

## Claims

1. Motor vehicle electrical system with an internal combustion engine (BKM) and, connected mechanically thereto, an integrated starter generator (ISG) which, in generator mode, charges a double-layer capacitor (DLC) and a battery (B1) to a first voltage (U1) and, in motor mode, is driven using the energy stored in the double-layer capacitor (DLC) or in the battery (B1) via a bidirectional AC/DC converter (1), a DC link capacitor (C) being disposed between the positive and the negative DC voltage terminal of said bidirectional AC/DC converter (1),
**characterised in that**
a first switch (S1) is provided via which the positive DC voltage terminal of the bidirectional AC/DC converter (1) can be connected to the positive pole of the battery (B1) whose negative pole is at reference potential (GND) and
a second switch (S2) is provided via which the positive DC voltage terminal of the bidirectional AC/DC converter (1) can be connected to the positive terminal of the double-layer capacitor (DLC) whose negative terminal is at reference potential (GND).

2. Motor vehicle electrical system according to Claim 1, **characterised in that** the first and the second switch (S1, S2) are interlocked in such a way that they cannot be simultaneously conducting.

3. Motor vehicle electrical system according to Claim 1, **characterised in that** the DC link capacitor (C) can be charged to a voltage value corresponding to the voltage present at the double-layer capacitor (DLC) or at the battery (B1) prior to the first or second switch (S1, S2) being rendered conducting by the AC/DC converter (1).

4. Motor vehicle electrical system according to Claim 1, **characterised in that** the flow of current into the AC/DC converter (1) or out of the AC/DC converter (1) can be reduced to a minimal value prior to the first or second switch (S1, S2) being rendered nonconducting.

5. Motor vehicle electrical system according to Claim 1, **characterised in that** a control circuit (PWM) is provided by means of which the double-layer capacitor (DLC) can be recharged from the battery (B1).

6. Motor vehicle electrical system according to Claim 1, **characterised in that** the double-layer capacitor (DLC) is charged to a voltage higher than the voltage (U1) of the battery (B1).

7. Motor vehicle electrical system according to Claim 1, having another battery (B2) for supplying other loads (v) with a second voltage (U2) which is charged by the battery (B1) via a bidirectional DC/DC converter (3),
**characterised in that**
a third switch (S3) is provided via which the positive pole of the first battery (B1) can be connected to a positive terminal of the bidirectional DC/DC converter (3), and
a fourth switch (S4) is provided via which the positive terminal of the double-layer capacitor (DLC) can be connected to the same positive terminal of the bidirectional DC/DC converter (3).

8. Motor vehicle electrical system according to Claim 7, **characterised in that** the third and the fourth switch (S3, S4) are interlocked in such a way that they cannot be simultaneously conducting.

9. Motor vehicle electrical system according to one of the preceding Claims, **characterised in that** operating sequences such as
- charging of the DC link capacitor (C) to a voltage value corresponding to the voltage present at the double-layer capacitor (DLC) or at the 36 V battery (B1) via the AC/DC converter (1) ,
- determination of the operating directions of the converters (step-up or step-down),
- control of the switch settings of the switches S1 to S4
can be open/closed loop controlled by an open/closed loop control circuit.

10. Motor vehicle electrical system according to one of Claims 1 to 6 and 9, **characterised in that**
in motor mode of the integrated starter generator (ISG):
- the DC link capacitor (C) is charged to a specifiable voltage when the switches (S1 and S2) are nonconducting,
- the battery (B1) is charged when the first switch (S1) is conducting,
- the double-layer capacitor (DLC) is charged when the second switch (S2) is conducting,
in generator mode of the integrated starter generator (ISG):
- the starter generator (ISG) is driven using energy from the battery (B1) when the first switch (S1) is conducting, and
- the starter generator (ISG) is driven using energy from the double-layer capacitor (DLC) when the second switch (S2) is conducting.

11. Motor vehicle electrical system according to Claim 7 or 8, **characterised in that**
- the battery (B1) charges or is charged by the other battery (B2) when the third switch (S3) is conducting, and
- the double-layer capacitor (DLC) charges or is charged by the other battery (B2) when the fourth switch (S4) is conducting.

## Revendications

1. Réseau de bord de véhicule automobile comprenant un moteur à combustion interne (BKM) et un démarreur-génératrice intégré (ISG) connecté mécaniquement à ce moteur, qui, par l'intermédiaire d'un convertisseur AC/DC (1) dans le fonctionnement en génératrice, charge un condensateur à double couche (DLC) et un accumulateur (B1) à une première tension (U1), tandis que, dans le fonctionnement en moteur, il est entraîné avec l'énergie accumulée dans le condensateur à double couche (DLC) ou dans l'accumulateur (B1), dans lequel
un condensateur de circuit intermédiaire (C ) est intercalé entre la borne de tension continue positive et la borne de tension continue négative du convertisseur AC/DC bidirectionnel (1),
**caractérisé en ce qu'**
il est prévu un premier interrupteur (S1) par l'intermédiaire duquel la borne de tension continue positive du convertisseur AC/DC bidirectionnel (1) peut être connectée au pôle plus de l'accumulateur (B1) dont le pôle moins est au potentiel de référence (GND) et
il est prévu un deuxième interrupteur (S2) par l'intermédiaire duquel la borne de tension continue positive du convertisseur AC/DC bidirectionnel (1) peut être connectée à la borne positive du condensateur à double couche (DLC) dont la borne négative est au potentiel de référence (GND).

2. Réseau de bord de véhicule automobile selon la revendication 1, **caractérisé en ce que** le premier interrupteur et le deuxième interrupteur (S1, S2) sont verrouillés l'un par rapport à l'autre, de manière que les deux interrupteurs ne puissent pas être conducteurs en même temps.

3. Réseau de bord de véhicule automobile selon la revendication 1, **caractérisé en ce que** le condensateur de circuit intermédiaire (C) peut être chargé, avant la mise à l'état conducteur du premier interrupteur et du deuxième interrupteur (S1, S2), par le convertisseur AC/DC (1) à une valeur de tension qui correspond à la tension présente sur le condensateur à double couche (DLC) ou sur l'accumulateur (B1).

4. Réseau de bord de véhicule automobile selon la revendication 1, **caractérisé en ce que** le flux de courant entrant dans le convertisseur AC/DC (1) ou sortant du convertisseur AC/DC (1) peut être réduit à une valeur minimale avant la mise à l'état non conducteur du premier ou deuxième interrupteur (S1, S2).

5. Réseau de bord de véhicule automobile selon la revendication 1, **caractérisé en ce qu'**il est prévu un montage de régulation (PWM) au moyen duquel le condensateur à double couche (DLC) peut être rechargé à partir de l'accumulateur (B1).

6. Réseau de bord de véhicule automobile selon la revendication 1, **caractérisé en ce que** le condensateur à double couche (DLC) est chargé à une tension relevée, supérieure à la tension (U1) de l'accumulateur (B1).

7. Réseau de bord de véhicule automobile selon la revendication 1, comprenant un accumulateur supplémentaire (B2) destiné à alimenter des charges supplémentaires (v) avec une deuxième tension (U2), accumulateur qui est chargé à partir de l'accumulateur (B1) par l'intermédiaire d'un convertisseur DC/DC bidirectionnel (3),
**caractérisé en ce qu'**
il est prévu un troisième interrupteur (S3) par l'intermédiaire duquel le pôle plus du premier accumulateur (B1) peut être connecté à une borne positive du convertisseur DCIDC bidirectionnel (3), et
il est prévu un quatrième interrupteur (S4) par l'intermédiaire duquel la borne positive du condensateur à double couche (DLC) peut être connectée à la même borne positive du convertisseur DC/DC bidirectionnel.

8. Réseau de bord de véhicule automobile selon la revendication 7, **caractérisé en ce que** les troisième et quatrième interrupteurs (S3, S4) sont verrouillés l'un par rapport à l'autre, de telle manière que les deux ne puissent pas être conducteurs en même temps.

9. Réseau de bord de véhicule automobile selon une des revendications précédentes, **caractérisé en ce que** les déroulements de fonctionnement tels que
- charge du condensateur de circuit intermédiaire (C ) à une valeur de tension qui correspond à la tension présente sur le condensateur à double couche (DLC) ou sur l'accumulateur de 36 V (B1) par l'intermédiaire du convertisseur AC/DC (1),
- détermination du sens de travail des convertisseurs (conversion élévatrice ou abaisseuse),
- commande des positions de commutation des interrupteurs S1 à S4,
sont commandé/réglés par un circuit de commande/régulation.

10. Réseau de bord de véhicule automobile selon une des revendications 1 à 6 et 9, **caractérisé en ce que**,
dans le fonctionnement en moteur du démarreur-génératrice intégré (ISG) :
- lorsque les interrupteurs (S1 et S2) sont non conducteurs, le condensateur de circuit intermédiaire (C) est chargé à une tension pouvant être prédéterminée,
- lorsque le premier interrupteur (S1) est conducteur, l'accumulateur (B1) se charge,
- lorsque le deuxième interrupteur (S2) est conducteur, le condensateur à double couche (DLC) se charge,
tandis que, dans le fonctionnement en génératrice du démarreur-génératrice intégré (ISG) :
- lorsque le premier interrupteur (S1) est conducteur, le démarreur-génératrice (ISG) est entraîné avec de l'énergie provenant de l'accumulateur (B1) et
- lorsque le deuxième interrupteur (S2) est conducteur, le démarreur-génératrice (ISG) est entraîné avec de l'énergie provenant du condensateur à double couche (DLC).

11. Réseau de bord de véhicule automobile selon la revendication 7 ou 8, **caractérisé en ce que**
- lorsque le troisième interrupteur (S3) est conducteur, l'accumulateur (B1) charge l'accumulateur supplémentaire (B2) ou est chargé par ce dernier, et
- lorsque le quatrième interrupteur (S4) est conducteur, le condensateur à double couche (DLC) charge l'accumulateur supplémentaire (B2) ou est chargé par ce dernier.
